(19) Europäisches Patentamt
European Patent Office
Office européen des brevets

(11) **EP 3 519 362 B1**

(12) **EUROPEAN PATENT SPECIFICATION**

(45) Date of publication and mention
of the grant of the patent:
**04.03.2020   Bulletin 2020/10**

(21) Application number: **17758137.8**

(22) Date of filing: **24.08.2017**

(51) Int Cl.:
*C02F 1/52* (2006.01)          *C02F 1/54* (2006.01)
*C02F 1/56* (2006.01)          *C02F 103/00* (2006.01)

(86) International application number:
**PCT/EP2017/071373**

(87) International publication number:
**WO 2018/059846 (05.04.2018 Gazette 2018/14)**

(54) **WATER PURIFICATION COMPOSITION FOR CLARIFYING GREYWATER**

WASSERREINIGUNGSZUSAMMENSETZUNG ZUM KLÄREN VON GRAUWASSER

COMPOSITION DE PURIFICATION D'EAU POUR CLARIFIER LES EAUX MÉNAGÈRES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **29.09.2016  EP 16191344**

(43) Date of publication of application:
**07.08.2019   Bulletin 2019/32**

(73) Proprietors:
• **Unilever N.V.**
  **3013 AL Rotterdam (NL)**
  Designated Contracting States:
  **AL AT BE BG CH CZ DE DK EE ES FI FR GR HR
  HU IS IT LI LT LU LV MC MK NL NO PL PT RO RS
  SE SI SK SM TR**
• **Unilever PLC**
  **London, Greater London EC4Y 0DY (GB)**
  Designated Contracting States:
  **CY GB IE MT**

(72) Inventors:
• **CHATTERJEE, Debosree
  Bangalore 560066 (IN)**
• **THIRUMENI, Dhanalakshmi
  Bangalore 560066 (IN)**

(74) Representative: **Reijns, Tiemen Geert Pieter
Unilever Patent Group
Bronland 14
6708 WH Wageningen (NL)**

(56) References cited:
WO-A1-2014/001078          CN-A- 1 994 915
JP-A- 2015 020 132          US-B1- 6 531 531

**Description**

**Field of the invention**

The present invention relates to a water purification composition and to the use of the water purification composition for clarifying greywater, preferably for clarifying greywater produced by washing of clothes, utensils, floor cleaning, or bathing. The water purification composition comprises an inorganic flocculant, a surfactant scavenging system and a non-ionic and/or anionic polymeric flocculant having a molecular weight of more than 100 kDa. The invention further relates to a process for clarifying greywater.

**Background of the invention**

Water is becoming a more scarcely available commodity, especially in developing countries, where it is not unusual that people walk many kilometres to reach a water source.

Greywater is all wastewater generated in households or office buildings from streams without faecal contamination, i.e. all streams except for the wastewater from toilets. Sources of greywater include, e.g. sinks, showers, baths, clothes washing machines or dish washers. As greywater contains fewer pathogens than domestic wastewater, it is generally safer to handle and to reuse for toilet flushing.

One way of saving water is to re-use the waste water. Several types of water purification processes and water purification compositions have been disclosed in the prior art. In general, a lot of water purification compositions facilitate water clarification by using sweep flocculation followed by bridging flocculation.

Sweep flocculation encompasses the following: electrolyte flocculants, such as Al-based salts or Fe-based salts, are added in a sufficient amount so that they form amorphous $Al(OH)_3$ or $Fe(OH)_3$ particles. These amorphous particles entrap suspended solids leading to clarification of water. $Al(OH)_3$ or $Fe(OH)_3$ particles with entrapped suspended solids called sweep flocs, have a size in the range of 100 $\mu$m or below. At this size the sweep flocs are still difficult to separate from the water by, e.g. filtration or decantation. Moreover, the kinetics of settling down of the sweep flocs is very slow.

Therefore, the next step is bridging flocculation which encompasses the addition of a polymer flocculant with a molecular weight of at least 100 kDa. These polymers are thought to adsorb on the sweep flocs and thereby bring the sweep flocs together to form bigger and stronger flocs. This phenomenon is known as bridging flocculation. This bridging mechanism helps in increasing the settling velocity of the flocs and contributes therefore to faster clarification of water.

The order of these processes is regulated by the differences in dissolution kinetics. Electrolyte flocculants are readily soluble, in contrast to polymer flocculants.

Water purification processes are typically found in context of industrial waste water purification. Various industries produce waste water, such as chemical manufacturing plants, dairies, canneries, distilleries, paper manufacturing plants, dyeing plants and others. These water purification processes for industrial waste water typically require large water treatment plants and are time-consuming processes.

Other type of water purification processes are carried out with the purpose of obtaining potable water, i.e. drinking water. Potable water should be suitable for human consumption and therefore may only contain very limited amounts of pathogens. These processes are time consuming and complicated, because they should remove all pathogens.

The document US6531531 B1 discloses an exemplary water purification composition comprising a mixture of divalent sulfate salt and quaternary ammonium cationic surfactant known from the prior art.

WO 2010/034604 A1 (UNILEVER) describes a method for purification of water to drinking water, said method comprising the steps of:

(i) mixing a composition comprising:

a. 0.5 % by weight to 5 % by weight of an Iron or Aluminium salt;
b. 15 % by weight to 70 % by weight of chloride or sulphate of Magnesium or Calcium; and,
c. 10 % by weight to 80 % by weight clay; with said water,

wherein 0.1 to .5 g of the composition is mixed with every litre of water, and,
(ii) passing said water through a filter medium.

Yet another type of water purification processes is the clarification of greywater in households for re-use of the clarified water in washing processes in the household.

To be able to re-use greywater for the next household washing or cleaning purpose, it is required to remove, at the very least, suspended solids and surfactants. The requirements for removal of pathogens are less stringent. The removal of surfactants from the greywater is required, because even at very low levels of residual surfactant foam is generated, which may give a 'not clean water' impression to consumers.

In case, for example, the greywater of the first laundry needs to be re-used in the second laundry rinse, there is a need for a water purification process that requires limited resources and requires a short purification period. WO 2014/001078 A1 (UNILEVER) describes such a process.

WO 2014/001078 A1 describes a water purification composition for clarifying a household wash or rinse liquor comprising anionic surfactant, the composition comprising:

a. 8 to 50 % by weight of an electrolyte flocculant selected from aluminium and/or ferric salts;
b. 0.2 to 5 % by weight of a neutral and/or anionically modified polymer coagulant (MW greater than 100 kDa);
c. 0.1 to 16 % by weight of a solution of a quaternary ammonium cationic surfactant and/or polymers of quaternary ammonium compounds and wherein the molar ratio of the active cationic groups on the cationic surfactant or polymer to anionic surfactant in the liquor is between 5:1 and 1:5; and
d. an inorganic filler, having a density of at least 1.5 kg/dm$^3$.

The water purification composition of WO 2014/001078 A1 reduces the turbidity of the greywater and reduces the level of the surfactant in the greywater in a time period of about 7 minutes, as is described in the examples of WO 2014/001078 A1.

## Summary of the invention

The inventors of the present invention have surprisingly found that the addition of a surfactant scavenging system, comprising both a water-soluble divalent sulfate salt and a quaternary ammonium cationic surfactant, to a water purification composition for clarifying greywater is particularly advantageous in achieving better clarity of treated water and enhancing the removal of anionic surfactant.

More specifically, the present invention provides a water purification composition for clarifying greywater, generated from household wash and rinse liquor, comprising anionic surfactants, the composition comprising:

(i) 10 to 70 % by weight, calculated by weight of dry matter, of an inorganic flocculant selected from polyaluminium flocculant, poly-iron flocculant and combinations thereof, said inorganic flocculant having a basicity in the range of 45 % to 85 %;
(ii) 1 to 45 % by weight, calculated by weight of dry matter, of a surfactant scavenging system comprising:

(a) water-soluble divalent sulfate salt;
(b) quaternary ammonium cationic surfactant;

(iii) 3 to 15 % by weight, calculated by weight of dry matter, of a non-ionic and/or anionic polymeric flocculant, having a molecular weight of more than 100 kDa; and
(iv) an inorganic filler, having a density of at least 1.5 kg/dm3,

wherein the water-soluble divalent sulfate salt (a) and the quaternary ammonium cationic surfactant (b) in the surfactant scavenging system, are present in a ratio X defined by:

$$X = \frac{(\text{Weight ratio of (a): (b)})}{(\% \text{ by weight of (a)} + \% \text{ by weight of (b)})}$$

wherein X is the range of 0.01 to 0.5.

Without wishing to be bound by theory, it is believed that surfactant scavenging system of the present invention enhances the precipitation of both anionic surfactants and the $Al(OH)_3$ or $Fe(OH)_3$ sweep flocs, which leads to both improved sweep flocculation and improved surfactant removal.

The combination of the water-soluble divalent sulfate salt and the quaternary ammonium cationic surfactant, in a specific ratio, in the water purification composition allows for the clarification of greywater in a shorter time as compared to quaternary ammonium cationic surfactant alone as is described in WO 2014/001078 A1.

The present invention further relates to the use of the water purification composition, disclosed herein, for clarifying greywater. The present invention also pertains to a process of clarifying greywater comprising anionic surfactants and suspended solids, which comprises the addition of the water purification composition, disclosed herein to the greywater.

**Detailed description of the invention**

A first aspect of the invention relates to a water purification composition for clarifying greywater comprising anionic surfactants, the composition comprising:

(i) 10 to 70 % by weight, calculated by weight of dry matter, of an inorganic flocculant selected from polyaluminium flocculant, poly-iron flocculant and combinations thereof, said inorganic flocculant having a basicity in the range of 45 % to 85 %;
(ii) 1 to 45 % by weight, calculated by weight of dry matter, of a surfactant scavenging system comprising:

(a) water-soluble divalent sulfate salt;
(b) quaternary ammonium cationic surfactant;

(iii) 3 to 15 % by weight, calculated by weight of dry matter, of a non-ionic and/or anionic polymeric flocculant, having a molecular weight of more than 100 kDa; and
(iv) an inorganic filler, having a density of at least 1.5 kg/dm3,

wherein the water-soluble divalent sulfate salt (a) and the quaternary ammonium cationic surfactant (b) in the surfactant scavenging system, are present in a ratio X defined by:

$$X = \frac{\text{(Weight ratio of (a) : (b))}}{\text{(\% by weight of (a) + \% by weight of (b))}}$$

wherein X is the range of 0.01 to 0.5.
The term 'flocculation' as used herein refers to a process of contact and adhesion whereby the particles of a dispersion form larger-size clusters.
The term "turbidity" as used herein refers to the cloudiness or haziness of a fluid caused by large number of individual particles.
The unit "NTU" as used herein refers to Nephelometric Turbidity Units (NTU), as measured by the nephelometer, Turbiquant® 2100T, manufactured by Merck. The nephelometer preferably is calibrated using the standard formazin solutions as recommended by the instrument manufacturer. The nephelometer measures the propensity of particles to scatter a light beam focused on them.
The term "basicity" as used herein refers to is defined by the equation: $100\% * [OH] / (3 * [Al])$.
The term "aluminium chlorohydrate" as used herein refers to compounds having the general formula $(Al_nCl_{(3n-m)}(OH)_m)$, wherein the basicity of said compounds is higher than 60 %.
The term "polyaluminium chloride" as used herein refers to compounds having the general formula $(Al_nCl_{(3n-m)}(OH)_m)$, wherein the basicity of said compound is equal to 60% or less.
The purification composition according to the present invention preferably comprises 15 to 65 % by weight, more preferably 20 to 60 % by weight of the inorganic flocculant, calculated by weight of dry matter. Most preferably the purification composition comprises 35 to 55 % by weight of the inorganic flocculant, calculated by weight of dry matter.
The basicity of the inorganic flocculent in the purification composition selected from polyaluminium flocculant, poly-iron flocculant and combinations thereof, is preferably in the range of 55 to 85, more preferably in the range of 60 to 85.
The inorganic flocculent in the purification composition is preferably a polyaluminium flocculant.
The polyaluminium flocculant in the purification composition is preferably selected from polyaluminium chloride, polyaluminium chlorosulfate, aluminium chlorohydrate and combinations thereof. More preferably the polyaluminium flocculant is aluminium chlorohydrate.
The purification composition according to the present invention preferably comprises, 4-42 % by weight, as calculated by weight of dry matter, more preferably 12-30 % by weight, as calculated by weight of dry matter, of the surfactant scavenging system. The surfactant-scavenging system of the purification composition, as disclosed herein, comprises:

a. water-soluble divalent sulfate salt; and

b. quaternary ammonium cationic surfactant.

The water-soluble divalent sulfate salt (a) and the quaternary ammonium cationic surfactant (b) in the surfactant scavenging system are preferably present in a ratio X defined by:

$$X = \frac{\text{(Weight ratio of (a): (b))}}{\text{(\% by weight of (a) + \% by weight of (b))}}$$

wherein X is the range of 0.01 to 0.5, more preferably X is in the range 0.1 to 0.4.

The weight ratio of the water-soluble divalent sulfate salt and the quaternary ammonium cationic surfactant in the surfactant scavenging system preferably lies within 0.04 to 25. More preferably the weight ratio lies within 0.5 to 2.0.

Preferably the water-soluble divalent sulfate salt is selected from $CaSO_4$, $MgSO_4$, hydrated salts thereof and combinations thereof. More preferably the water-soluble divalent sulfate salt is $CaSO_4$ and/or hydrated salts thereof.

The quaternary ammonium cationic surfactant is preferably selected from halides of benzalkonium, cetyl-trimethyl-ammonium, tetradecyl-trimethyl-ammonium, dodecyl-trimethyl-ammonium, stearyl-trimethyl-ammonium, octadecyl-trimethyl-ammonium, dodecylpyridinium, cetylpyridinium, tetrabutyl-ammonium, tetraheptyl-ammonium, 1,3-decyl-2-methyl-imidazolium, 1-hexadecyl-3-methyl-imidazolium, didecyl-dimethylammonium and combinations thereof.

The halides as mentioned herein, are preferably selected from chloride, bromide, or combinations thereof.

The quaternary ammonium cationic surfactant is more preferably selected from halides of cetyl-trimethyl-ammonium, cetylpyridinium and combinations thereof. Even more preferably, the quaternary ammonium cationic surfactant is selected from cetyl-trimethyl-ammonium bromide (CTAB), cetylpyridinium chloride and combinations thereof.

The purification composition according to the present invention preferably comprises, 3 to 15 % by weight, as calculated by weight of dry matter, of a non-ionic and/or anionic polymeric flocculant, having a molecular weight of more than 100 kDa. More preferably the purification composition comprises, 5 to 10 % by weight, as calculated by weight of dry matter, of a non-ionic and/or anionic polymeric flocculant, having a molecular weight of more than 100 kDa.

The polymeric flocculant is preferably an anionic polymeric flocculant. The anionic polymeric flocculant is preferably selected from salts of poly (acrylic acid), polyacrylamide, and copolymers thereof. More preferably, the anionic polymeric flocculant is preferably selected from sodium salts of poly(acrylic acid), polyacrylamide, and copolymers thereof.

The molecular weight of the non-ionic and/or anionic polymeric flocculant is preferably in between 100 to 5,000 kDa, more preferably between 250 to 2,000 kDa and most preferably in between 500 to 1,000 kDa. The non-ionic and/or anionic polymer is preferably water soluble. For avoidance of doubt, the unit Da (Dalton) as used herein refers to atomic mass unit (amu, the less commonly used SI unit).

In a preferred embodiment, the purification composition further comprises an inorganic filler. The inorganic filler is preferably an inert inorganic filler. The inorganic filler is preferably a solid with a high density. The density of the inorganic filler is preferably at least 1.5 kg/dm$^3$. More preferably the density of the inorganic filler is between 1.75 to 3.5 kg/dm$^3$ and most preferably the density of the inorganic filler is between 2 to 2.5 kg/dm$^3$.

The purification composition according to the present invention preferably comprises 20 to 60 % by weight of the inorganic filler, calculated by weight of dry matter. More preferably the purification composition comprises 25 to 55 % by weight of the inorganic filler, most preferably the purification composition comprises 30-50 % by weight of the inorganic filler, as calculated by weight of dry matter.

The inorganic filler is preferably selected from feldspar, clay, alumina, aluminium hydroxides, magnesium hydroxides, iron hydroxides, calcite, and combinations thereof. More preferably the inorganic filler is selected from feldspar, clay and combinations thereof. Even more preferably the inorganic filler is selected from feldspar, bentonite and combinations thereof. Most preferably the inorganic filler is feldspar.

The purification composition, according to the present invention, preferably has a water content of not more than 15 % by weight. More preferably the water content of the purification composition is not more than 12 % by weight. Most preferably the water content of the purification composition is within 5-10 % by weight.

The purification composition according to the present invention is preferably in particulate form. The purification composition is preferably prepared according to the following steps. Preferably, the individual ingredients are weighed as per the proportion and mixed using an appropriate powder mixing apparatus or equipment known in the art.

A second aspect of the present invention relates to the use of a purification composition as described herein before, for the clarification of greywater, preferably for clarification of greywater, generated in households or office buildings from streams without fecal contamination, i.e. all streams except for the wastewater from toilets.

It is contemplated that the composition of the present invention is used to clarify greywater generated from and including but not limited to sinks, showers, baths, clothes washing machines, or dish washers.

Without wishing to be bound by theory, it is contemplated that the composition of the present invention is used to clarify greywater generated from household wash and rinse liquor. The composition of the present invention is used to clarify greywater produced by personal wash, for e.g., greywater generated from baths, showers and/or bathroom sinks. It is also contemplated that the composition as described herein is used for the clarification of greywater produced by laundry washing.

The purification composition of the present invention is used to clarify greywater for non-potable reuse of the clarified water. Non-potable reuse applications include but are not limited to industrial use, irrigation, laundry wash and rinse, toilet flushing, etc.

A third aspect of the present invention relates to a process for clarifying greywater comprising anionic surfactants and suspended solids. The process for clarifying greywater comprising the steps of:

   a. dosing the purification composition, as described herein before, in a dose of 0.2 to 3 grams per litre of greywater to obtain a mixture of the greywater and the purification composition;
   b. stirring said mixture to induce the formation of flocs; and
   c. separating the flocs from the water to obtain clarified water.

The stirring of the mixture in the process of the present invention is preferably performed for at least 10 seconds, more preferably performed for 15 to 60 seconds and most preferably the stirring of the mixture is performed for 15 to 50 seconds. In a preferred embodiment, different patterns of stirring may be applied, e.g. stirring-pause-stirring or stirring-pause or variations thereof.

The separation of the flocs from the water is preferably performed by filtration, decantation or combination thereof. More preferably the separation of the flocs from the water is performed by filtration.

The invention will now be illustrated by means of the following non-limiting examples

## Examples

Several purification compositions were compared for their clarification effect on laundry wash water comprising surfactants and having a turbidity of about 100 NTU.

Model laundry wash water was prepared by mixing 1.2 g/l of OMO TT market sample liquid detergent and 0.1 g/l of model particulate soil (comprising 90 % china clay, 5 % silica, 2.5 % carbon soot, 2.5 % iron oxide) with deionised water with added hardness of 20 ppm comprising of multivalent cations (2° FH - French hardness). Turbidity of this model wash water is 100 NTU with a pH of 7.5 and an anionic surfactant level of 170 ppm.

Different water purification compositions were prepared with the ingredients displayed in Table 1. All the ingredients were weighed as per proportion and were dry mixed to form a homogeneous mixture.

Table 1

| Ingredients/% by weight | 1 | 2 | A | B | C | D |
|---|---|---|---|---|---|---|
| Aluminium chlorohydrate with basicity 85 % (ACH) | 42 | 42 | 42 | 42 | 42 | 42 |
| Cetyl-trimethyl-ammonium bromide (CTAB) | 6 | 6 | 6 | - | - | 6 |
| $CaSO_4$ | 6 | - | - | 6 | - | - |
| $MgSO_4$ | - | 6 | - | - | - | - |
| $CaCl_2$ | - | - | - | - | - | 6 |
| Polyacryl amide | 5 | 5 | 5 | 5 | 5 | 5 |
| Feldspar | 41 | 41 | 47 | 47 | 53 | 41 |

The water purification compositions shown in Table 1 were added to the model laundry wash water in an amount of 0.5 gram per litre while continuously stirring, for 30 seconds at 100 rpm. After these 30 seconds of stirring the mixture was allowed to standstill for 1.5 minutes to allow the flocs to separate from the clarified water. Next, the clarified water samples were sampled for analysis.

The turbidity of the samples was measured using a Turbiquant® 2100 T manufactured by Merck. The calibration of the machine was done using standard protocol as per manual of the instrument.

The amount of residual anionic surfactant in the samples was measured by cationic titration as described in the ASTM standard: ASTM D 1681.

The results of the turbidity and residual anionic surfactant measurements are presented in Table 2. A turbidity of the treated water having a value less than 15 NTU and residual surfactant concentration less than 15 ppm was acceptable.

Table 2

| Results | 1 | 2 | A | B | C | D |
|---|---|---|---|---|---|---|
| Turbidity (NTU) | 7 | 12 | 24 | 17 | 32 | 30 |
| Residual anionic surfactant (ppm) | 13 | 14 | 41 | 30 | 50 | 40 |

## Example 2

*Clarification of Greywater*

Flocculation experiments were conducted for clarifying the greywater generated in a household such as personal wash water, dish wash water, laundry water etc. The flocculation experiments were conducted with simulated greywater in stirred system (reactor) with the impeller speed 350 rpm. 5 L of simulated water was taken in the reactor and the flocculant powder was added to it while stirring was on. The contents were mixed for 30 S and then the reactor mixing is stopped. Post this the flocculated suspension is kept under stagnant condition for 90 S for the flocs and treated water to stratify. Water samples were collected from the water layer for turbidity measurements.

Flocculation composition, used for the flocculation experiments as described below, was prepared with the ingredients displayed in Table 3. All the ingredients were weighed as per proportion and were dry mixed to form a homogeneous mixture.

Table 3

| Ingredients | E (wt.%) |
|---|---|
| Aluminium chlorohydrate with a basicity of 85% | 72.46 |
| Cetyl-trimethyl-ammonium bromide (CTAB) | 0.36 |
| $CaSO_4$ | 0.36 |
| PAM | 5.07 |
| Feldspar | 21.74 |
| X | 1.389 |

## A. Simulated water condition for Laundry water (using Powder detergent).

Model laundry wash water was prepared by mixing 2 g/l of Rin Advanced detergent powder (Market sample, batch January 2015) and 0.1 g/l of model particulate soil (comprising 90% china clay, 5% silica, 2.5% carbon soot, 2.5% iron oxide) with deionised water with added hardness of 20 ppm comprising of Calcium and Magnesium cations (2 □FH - French hardness). Turbidity of this model wash water is 400 NTU with a pH of 10.5 and an anionic surfactant level of 300 ppm.

The results of the turbidity and pH measurements are presented in Table 4.

Table 4

| Parameters | Before flocculation | Post flocculation |
|---|---|---|
| Turbidity(NTU) | 400 | 8 |
| pH | 10.5 | 7.5 |

## B. Simulated water condition for Laundry water (using liquid detergent)

Model laundry wash water was prepared by mixing 1.2 g/l of OMO TT market sample liquid detergent and 0.1 g/l of model particulate soil (comprising 90% china clay, 5% silica, 2.5% carbon soot, 2.5% iron oxide) with deionised water with added hardness of 20 ppm comprising of Calcium and Magnesium cations (2 □FH - French hardness). Turbidity of this model wash water is 100 NTU with a pH of 7.5 and an anionic surfactant level of 170 ppm.

The results of the turbidity and pH measurements are presented in Table 5

Table 5

| Parameters | Before flocculation | Post flocculation |
|---|---|---|
| Turbidity(NTU) | 100 | 5 |
| pH | 8 | 7.5 |

## C. Simulated water condition for Personal wash water

Model personal wash water was prepared by mixing 0.8 g/l of Dove shampoo market sample liquid and 0.05 g/l of model particulate soil (comprising 90% china clay, 5% silica, 2.5% carbon soot, 2.5% iron oxide) with deionised water with added hardness of 20 ppm comprising of calcium and magnesium cations (2 □FH - French hardness). To this, 30 ppm of triglycerides was added to represent oily soil. Turbidity of this model wash water is 100 NTU with a pH of 7.

Flocculation composition, used for the flocculation experiment, was prepared with the ingredients displayed in Table 6. All the ingredients were weighed as per proportion and were dry mixed to form a homogeneous mixture.

The results of the turbidity and pH measurements are presented in Table 7.

Table 6

| Ingredients | % by wt |
|---|---|
| ACH | 47.35 |
| Polymer, Anionic | 3.41 |
| Calcium sulphate | 5.68 |
| CTAB | 5.68 |
| Feldspar | 37.88 |

Table 7

| Parameters | Before flocculation | Post flocculation |
|---|---|---|
| Turbidity(NTU) | 100 | 4 |
| pH | 7.2 | 7 |

## D. Simulated water condition for dish wash water

Model dish wash water was prepared by mixing 3 g/l of Vim Liquid market sample and sunflower oil 0.5 g/l in tap water containing 1200 ppm Total dissolved solids. Turbidity of this model wash water is 500 NTU with a pH of 7.5.

Flocculation composition, used for the flocculation experiment, was prepared with the ingredients displayed in Table 8. All the ingredients were weighed as per proportion and were dry mixed to form a homogeneous mixture.

The results of the turbidity and pH measurements are presented in Table 9.

Table 8

| Ingredients | % by wt |
|---|---|
| ACH | 33.71 |
| Polymer, Anionic | 5.62 |
| Calcium sulphate | 13.48 |
| CTAB | 13.48 |
| Feldspar | 33.71 |

Table 9

| Parameters | Before flocculation | Post flocculation |
|---|---|---|
| Turbidity(NTU) | 500 | 12 |
| pH | 8 | 7.3 |

**Example 3**

*Effect of Presence of Different types of sulphate salts forming the surfactant-scavenging system*

Model laundry wash water was prepared by mixing 1.2 g/l of OMO TT market sample liquid detergent and 0.1 g/l of model particulate soil (comprising 90% china clay, 5% silica, 2.5% carbon soot, 2.5% iron oxide) with deionised water with added hardness of 20 ppm comprising of comprising of Calcium and Magnesium cations (2 □FH - French hardness). Turbidity of this model wash water is 100 NTU with a pH of 7.5 and an anionic surfactant level of 170 ppm. Different flocculation compositions, used for the flocculation experiment, were prepared with the ingredients displayed in Table 10. All the ingredients were weighed as per proportion and were dry mixed to form a homogeneous mixture.
The results of the turbidity measurements are presented in Table 11.

Table 10

| Ingredients | % composition C2283 | A | B | C | D |
|---|---|---|---|---|---|
| ACH | 41.4 | 41.4 | 41.4 | 41.4 | 41.4 |
| Feldspar | 41.4 | 41.4 | 41.4 | 41.4 | 41.4 |
| Cationic surfactant (CTAB) | 6.2 | 6.2 | 6.2 | 6.2 | 6.2 |
| Polymer(anionic) | 4.8 | 4.8 | 4.8 | 4.8 | 4.8 |
| Ca SO4 | 6.2 | - | - | - | - |
| MgSO4 | - | 6.2 | - | - | - |
| ZnSO4 | - | - | 6.2 | - | - |
| K2SO4 | - | - | - | 6.2 | - |
|  | - | - | - | - | 6.2 |
| X | 0.08 | 0.08 | 0.08 | 0.08 | 0.08 |

Table 11

| Formulation | Turbidity, NTU |
|---|---|
| A | 6.95 |
| B | 12.1 |
| C | 14.8 |
| D | 15.2 |

**EXAMPLE 5**

*Defining the Surfactant-Scavenging system range for ratios(X)*

The Flocculation experiments were conducted with simulated greywater in stirred system (reactor) with the impeller speed 350 rpm. 5 L of simulated water was taken in the reactor and the flocculant powder was added to it while stirring was on. The contents were mixed for 30 S and then the reactor mixing is stopped. Post this the flocculated suspension is kept under stagnant condition for 90 S for the flocs to separate. Post this the flocculated suspension is kept under stagnant condition for 90 S for the flocs and treated water to stratify. Water samples were collected from the water layer for turbidity measurements. This protocol was followed to define range of ratio of sulphate and surfactant. Model laundry wash water was prepared by mixing 1.2 g/l of OMO TT market sample liquid detergent and 0.1 g/l of model particulate soil (comprising 90% china clay, 5% silica, 2.5% carbon soot, 2.5% iron oxide) with deionised water with added hardness of 20 ppm comprising of Calcium and Magnesium cations (2 □FH - French hardness). Turbidity of this model wash water is 100 NTU with a pH of 7.5 and an anionic surfactant level of 170 ppm.

The results of the turbidity measurements of greywater treated with compositions comprising divalent sulfate salt and cationic ammonium surfactant in present in different ratios are presented in Table 12.

Table 12

| | CaSo4+CTAB (Total %) | 0.2 | 4.3 | 0.01 | |
|---|---|---|---|---|---|
| ACH- 45%; Polymer-5%; Feldspar – 46% | 4% | 0.2 | 4.3 | 0.01 | |
| | | 0.4 | 4.1 | 0.02 | 34 |
| | | 0.7 | 3.7 | 0.045 | 28 |
| | | 1.5 | 3 | 0.112 | 14 |
| | | 2.2 | 2.2 | 0.225 | 8 |
| | | 2.2 | 2.2 | 0.225 | 13 |
| | | 3 | 1.5 | 0.449 | 12 |
| | | 3.7 | 0.7 | 1.123 | 24 |
| ACH-42%, Polymer -5%; Feldspar – 49% | 42% | 1.7 | 40.6 | 0.001 | 158 |
| | | 7 | 35.3 | 0.005 | 78 |
| | | 11 | 31.3 | 0.01 | 19 |

**Example 6**

*Kinetics data*

The Flocculation experiments were conducted with simulated laundry greywater in stirred system (reactor) with the impeller speed 350 rpm. 5 L of simulated water was taken in the reactor and the flocculant powder was added to it while stirring was on. The contents were mixed continuously. The samples were drawn at different time intervals of 10/15 S. the collected were kept under stagnant condition for 90 S for the flocs to separate. Then the clarified water samples were collected for turbidity measurements. The results of the turbidity are presented in Table 14.

Table 13

| Ingredients | Composition A % composition With the surfactant-scavenging system of the present invention- | Composition B % composition– devoid of the surfactant-scavenging system |
|---|---|---|
| ACH | 41.4 | 25 |
| Feldspar | 41.4 | 72.25 |
| Cationic surfactant (CTAB) | 6.2 | - |
| Polymer | 4.8 | 1.7 |
| Ca So4 | 6.2 | - |
| Cationic surfactant(BAC) | - | 1.75 |
| X | 0.08 | - |

Table 14

| System | Time of mixing(S) | Supernatant turbidity' NTU |
|---|---|---|
| Composition B | 20 | 82 |
| | 30 | 54 |
| | 45 | 32 |
| Composition A | 20 | 24 |
| | 30 | 6 |

**Example 7**

*Flocculating polymer(nonionic)*

Model laundry wash water was prepared by mixing 1.2 g/l of OMO TT market sample liquid detergent and 0.1 g/l of model particulate soil (comprising 90% china clay, 5% silica, 2.5% carbon soot, 2.5% iron oxide) with deionised water with added hardness of 20 ppm comprising of Calcium and Magnesium cations (2 □FH - French hardness). Turbidity of this model wash water is 100 NTU with a pH of 7.5 and an anionic surfactant level of 170 ppm.

The results of the turbidity and pH measurements are presented in Table 16.

Table 15

| Ingredients | % composition |
|---|---|
| ACH | 41.4 |
| Feldspar | 41.4 |
| Cationic surfactant (CTAB) | 6.2 |
| Polymer(Nonionic) | 4.8 |
| Ca So4 | 6.2 |
| X | 0.08 |

Table 16

| Parameters | Before flocculation | Post flocculation |
|---|---|---|
| Turbidity(NTU) | 100 | 9.5 |
| pH | 7.8 | 7.4 |

**Claims**

1. A water purification composition for clarifying greywater comprising anionic surfactants, generated from household wash and rinse liquor, the composition comprising:

   (i) 10 to 70 % by weight, calculated by weight of dry matter, of an inorganic flocculant selected from polyaluminium flocculant, poly-iron flocculant and combinations thereof, said inorganic flocculant having basicity in the range of 45 % to 85 %;
   (ii) 1 to 45 % by weight, calculated by weight of dry matter, of a surfactant scavenging system comprising:

   a) water-soluble divalent sulfate salt; and
   b) quaternary ammonium cationic surfactant;

   (iii) 3 to 15 % by weight, calculated by weight of dry matter, of a non-ionic or anionic polymeric flocculant, having a molecular weight of more than 100 kDa; and
   (iv) an inorganic filler, having a density of at least 1.5 kg/dm3,
   wherein the water-soluble divalent sulfate salt (a) and the quaternary ammonium cationic surfactant (b) in the surfactant scavenging system, are present in a ratio X defined by:

   $$X = \frac{\text{(Weight ratio of (a): (b))}}{\text{(\% by weight of (a) + \% by weight of (b))}},$$

   wherein X is in the range of 0.01 to 0.5.

2. Purification composition according to claim 1, wherein the inorganic flocculant is a polyaluminium flocculant.

3. Purification composition according to claim 2, wherein the polyaluminium flocculant is aluminium chlorohydrate.

4. Purification composition according to any of claims 1 to 3, wherein the water-soluble divalent sulfate salt is selected from $CaSO_4$, $MgSO_4$, hydrated salts thereof and combinations thereof.

5. Purification composition according to any of claims 1 to 4, wherein the quaternary ammonium cationic surfactant is selected from halides of benzalkonium, cetyl-trimethyl-ammonium, tetradecyl-trimethyl-ammonium, dodecyl-trimethyl-ammonium, stearyl trimethyl-ammonium, octadecyl-trimethyl-ammonium, dodecylpyridinium, cetylpyridinium, tetrabutyl-ammonium, tetraheptyl-ammonium, 1,3-decyl-2-methyl-imidazolium, 1-hexadecyl-3-methyl-imidazolium, didecyl-dimethyl-ammonium and combinations thereof.

6. Purification composition according to claim 5, wherein the quaternary ammonium cationic surfactant is selected from halides of cetyl-trimethyl-ammonium or cetylpyridinium and combinations thereof.

7. Purification composition according to any one of the previous claims, wherein the polymeric flocculant is an anionic polymeric flocculant.

8. Purification composition according to claim 8, wherein the anionic polymeric flocculant is selected from salts of poly(acrylic acid), polyacrylamide, and copolymers thereof.

9. Purification composition according to claim 1, wherein the composition contains 20 to 60 % by weight, calculated by weight of dry matter, of the inorganic filler.

10. Purification composition according to claim 11, wherein the inorganic filler is selected from feldspar, clay, alumina, aluminium hydroxides, magnesium hydroxides, iron hydroxides, calcite and combinations thereof.

11. Purification composition according to any one of claims 1 to 6, 8 to 9, and 11 to 12, wherein the composition has water content of not more than 15 % by weight.

12. Use of a purification composition according to any one of the previous claims for purification of greywater, preferably for purification of greywater produced by laundry washing.

13. Process for clarifying greywater comprising anionic surfactants and suspended solids, said process comprising the steps of:

   a) dosing the purification composition, according to any one of the claims 1-11, in a dose of 0.2 to 3 grams per liter of greywater to obtain a mixture of the greywater and the purification composition;
   b) stirring said mixture to induce the formation of flocs; and
   c) separating the flocs from the water to obtain clarified water.

**Patentansprüche**

1. Wasserreinigungszusammensetzung zum Klären von Grauwasser, umfassend anionische Tenside und erzeugt aus Haushaltswäsche und Spülflotte, wobei die Zusammensetzung umfasst:

   (i) 10 bis 70 Gewichts-%, berechnet auf Gewicht der Trockenmasse, eines anorganischen Flockungsmittels, ausgewählt unter Polyaluminiumflockungsmittel, Polyeisenflockungsmittel und Kombinationen davon, wobei das anorganische Flockungsmittel eine Basizität in dem Bereich von 45 % bis 85 % aufweist;
   (ii) 1 bis 45 Gewichts-%, berechnet auf Gewicht der Trockenmasse, eines Tensidspülsystems, umfassend:

      a) wasserlösliches zweiwertiges Sulfatsalz; und
      b) kationisches quaternäres Ammoniumtensid;

   (iii) 3 bis 15 Gewichts-%, berechnet auf Gewicht der Trockenmasse, eines nicht-ionischen oder anionischen polymeren Flockungsmittels, das ein Molekulargewicht von mehr als 100 kDa aufweist; und
   (iv) einen anorganischen Füllstoff, der eine Dichte von mindestens 1,5 kg/$dm^3$ aufweist,
   wobei das wasserlösliche zweiwertige Sulfatsalz (a) und das kationische quaternäre Ammoniumtensid (b) in dem Tensidspülsystem in einem Verhältnis X vorliegen, definiert durch:

$$X= \frac{(Gewichtsverhältnis\ von\ (a):(b))}{(Gewichts\text{-}\%\ von\ (a) + Gewichts\text{-}\%\ von\ (b))}\ ,$$

wobei X in dem Bereich von 0,01 bis 0,5 liegt.

**2.** Reinigungszusammensetzung nach Anspruch 1, wobei das anorganische Flockungsmittel ein Polyaluminiumflockungsmittel ist.

**3.** Reinigungszusammensetzung nach Anspruch 2, wobei das Polyaluminiumflockungsmittel Aluminiumchlorhydrat ist.

**4.** Reinigungszusammensetzung nach irgendeinem der Ansprüche 1 bis 3, wobei das wasserlösliche zweiwertige Sulfatsalz unter $CaSO_4$, $MgSO_4$, hydratisierten Salzen davon und Kombinationen davon ausgewählt ist.

**5.** Reinigungszusammensetzung nach irgendeinem der Ansprüche 1 bis 4, wobei das kationische quaternäre Ammoniumtensid ausgewählt ist unter den Halogeniden von Benzalkonium, Cetyltrimethylammonium, Tetradecyltrimethylammonium, Dodecyltrimethylammonium, Stearyltrimethylammonium, Octadecyltrimethylammonium, Dodecylpyridinium, Cetylpyridinium, Tetrabutylammonium, Tetraheptylammonium, 1,3-Decyl-2-methylimidazolium, 1-Hexadecyl-3-methylimidazolium, Didecyldimethylammonium und Kombinationen davon.

**6.** Reinigungszusammensetzung nach Anspruch 5, wobei das kationische quaternäre Ammoniumtensid unter Halogeniden von Cetyltrimethylammonium oder Cetylpyridinium und Kombinationen davon ausgewählt ist.

**7.** Reinigungszusammensetzung nach irgendeinem der vorhergehenden Ansprüche, wobei das polymere Flockungsmittel ein anionisches polymeres Flockungsmittel ist.

**8.** Reinigungszusammensetzung nach Anspruch 8, wobei das anionische polymere Flockungsmittel unter Salzen von Poly(acrylsäure), Polyacrylamid und Copolymeren davon ausgewählt ist.

**9.** Reinigungszusammensetzung nach Anspruch 1, wobei die Zusammensetzung 20 bis 60 Gewichts-%, berechnet auf Gewicht der Trockenmasse, des anorganischen Füllstoffs enthält.

**10.** Reinigungszusammensetzung nach Anspruch 11, wobei der anorganische Füllstoff unter Feldspat, Ton, Aluminiumoxid, Aluminiumhydroxiden, Magnesiumhydroxiden, Eisenhydroxiden, Calcit und Kombinationen davon ausgewählt ist.

**11.** Reinigungszusammensetzung nach irgendeinem der Ansprüche 1 bis 6, 8 bis 9 und 11 bis 12, wobei die Zusammensetzung einen Wassergehalt von nicht mehr als 15 Gewichts-% aufweist.

**12.** Verwendung einer Reinigungszusammensetzung nach irgendeinem der vorhergehenden Ansprüche zum Reinigen von Grauwasser, vorzugsweise zum Reinigen von Grauwasser, das durch Waschen von Wäsche erzeugt wurde.

**13.** Verfahren zum Reinigen von Grauwasser, umfassend anionische Tenside und suspendierte Feststoffe, wobei das Verfahren die Schritte umfasst:

a) Dosieren der Reinigungszusammensetzung nach irgendeinem der Ansprüche 1-11 in einer Dosis von 0,2 bis 3 Gramm pro Liter des Grauwassers, um eine Mischung von Grauwasser und Reinigungszusammensetzung zu erhalten;
b) Rühren der Mischung, um die Bildung von Flocken herbeizuführen; und
c) Abtrennen der Flocken von dem Wasser, um geklärtes Wasser zu erhalten.

**Revendications**

**1.** Composition de purification de l'eau pour clarifier des eaux grises comprenant des tensioactifs anioniques, générées à partir de liqueur de lavage et de rinçage domestique, la composition comprenant :

(i) 10 à 70 % en poids, calculés en poids de matière sèche, d'un floculant inorganique choisi parmi un floculant poly-aluminium, un floculant poly-fer et leurs combinaisons, ledit floculant inorganique ayant une basicité située dans la plage allant de 45 % à 85 % ;

(ii) 1 à 45 % en poids, calculés en poids de matière sèche, d'un système de piégeage de tensioactif comprenant :

a) un sel sulfate divalent soluble dans l'eau ; et
b) un tensioactif cationique ammonium quaternaire ;

(iii) 3 à 15 % en poids, calculés en poids de matière sèche, d'un floculant polymère non-ionique ou anionique, ayant une masse moléculaire supérieure à 100 kDa ; et
iv) une charge inorganique, ayant une masse volumique d'au moins 1,5 kg/dm$^3$,
dans laquelle le sel sulfate divalent soluble dans l'eau (a) et le tensioactif cationique ammonium quaternaire (b) dans le système de piégeage de tensioactif sont présents en un rapport X défini par :

$$X = \frac{(\text{rapport en poids (a)/(b)})}{(\%\text{ en poids de (a)} + \%\text{ en poids de b))}}$$

où X est situé dans la plage allant de 0,01 à 0,5.

2. Composition de purification selon la revendication 1, dans laquelle le floculant inorganique est un floculant poly-aluminium.

3. Composition de purification selon la revendication 2, dans laquelle le floculant poly-aluminium est le chlorhydrate d'aluminium.

4. Composition de purification selon l'une quelconque des revendications 1 à 3, dans laquelle le sel sulfate divalent soluble dans l'eau est choisi parmi $CaSO_4$, $MgSO_4$, leurs sels hydratés et leurs combinaisons.

5. Composition de purification selon l'une quelconque des revendications 1 à 4, dans laquelle le tensioactif cationique ammonium quaternaire est choisi parmi les halogénures de benzalkonium, cétyl-triméthyl-ammonium, tétradécyl-triméthyl-ammonium, dodécyl-triméthyl-ammonium, stéaryl-triméthyl-ammonium, octadécyl-triméthyl-ammonium, dodécylpyridinium, cétylpyridinium, tétrabutyl-ammonium, tétraheptyl-ammonium, 1,3-décyl-2-méthyl-imidazolium, 1-hexadécyl-3-méthyl-imidazolium, didécyl-diméthyl-ammonium et leurs combinaisons.

6. Composition de purification selon la revendication 5, dans laquelle le tensioactif cationique ammonium quaternaire est choisi parmi les halogénures de cétyl-triméthyl-ammonium ou de cétylpyridinium et leurs combinaisons.

7. Composition de purification selon l'une quelconque des revendications précédentes, dans laquelle le floculant polymère est un floculant polymère anionique.

8. Composition de purification selon la revendication 8, dans laquelle le floculant polymère anionique est choisi parmi les sels de poly(acide acrylique), polyacrylamide, et leurs copolymères.

9. Composition de purification selon la revendication 1, laquelle composition contient 20 à 60 % en poids, calculés en poids de matière sèche, de la charge inorganique.

10. Composition de purification selon la revendication 11, dans laquelle la charge inorganique est choisie parmi le feldspath, l'argile, l'alumine, les hydroxydes d'aluminium, les hydroxydes de magnésium, les hydroxydes de fer, la calcite et leurs combinaisons.

11. Composition de purification selon l'une quelconque des revendications 1 à 6, 8, 9, 11 et 12, laquelle composition a une teneur en eau non supérieure à 15 % en poids.

12. Utilisation d'une composition de purification selon l'une quelconque des revendications précédentes pour la purification des eaux grises, de préférence pour la purification des eaux grises produites par le lavage du linge.

**13.** Procédé pour clarifier des eaux grises comprenant des tensioactifs anioniques et des solides en suspension, ledit procédé comprenant les étapes suivantes :

a) dosage de la composition de purification selon l'une quelconque des revendications 1 à 11, en une dose de 0,2 à 3 grammes par litre d'eaux grises pour que soit obtenu un mélange des eaux grises et de la composition de purification ;
b) agitation dudit mélange pour induire la formation de flocs ; et
c) séparation des flocs d'avec l'eau pour que soit obtenue une eau clarifiée.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6531531 B1
- WO 2010034604 A1
- WO 2014001078 A1